# EUROPEAN PATENT APPLICATION

(11) **EP 1 873 499 A1**
(43) Date of publication of application: **02.01.2008**
(21) Application number: 06013538.1
(22) Date of filing: 30.06.2006
(51) Int. Cl.: G01F 1/684, G01F 1/688, G01F 1/692, G01P 5/10

(54) **Thermal flow sensor for high flow velocities**

(71) Applicant: Sensirion AG, 8712 Stäfa (CH)
(72) Inventor: von Waldkirch, Marc, 8702 Zollikon (CH)
(74) Representative: Blum, Rudolf Emil

(57) **Abstract**

A flow sensor comprises a heater (4) and two temperature sensors (6a, 6b) arranged symmetrically thereto, all of which are covered by an insulating layer (10). Several metal layers (11) are arranged over the insulating layer (11) and extend at least between the heater and the temperature sensors (6a, 6b). This arrangement increases the measuring range of the sensor to higher flows, in particular when the flow sensor is used to measure the flow of a liquid.

## Description

The invention relates to a flow sensor particularly suited for high flow velocities, in particular of liquids having high density and/or thermal capacity. The invention also relates to the application of such a flow sensor.

US 2003/0115952 describes a flow sensor having a substrate (such as a silicon substrate), a heater integrated on the substrate, one or two temperature sensors arranged adjacent to the heater, and an electrically insulating layer, such as SiN, covering the heater and the temperature sensor(s).

If a symmetrical arrangement with two temperature sensors on opposite sides of the heater is used, the temperature difference ΔT between the temperature sensors is a function of the flow of the liquid. In a first regime at low flow velocities, where heat conductance effects are dominant, the temperature difference ΔT increases with increasing flow. In a second regime at high flow velocities, where heat transport due to flow effects is dominant, the temperature difference ΔT decreases with increasing flow.

When a fluid with a high heat capacity - density product cₚ·**ρ** is used, such as a liquid, the first regime will be fairly small and most measurements will take place in the second regime, and even in an upper part of the second regime where the temperature difference AT becomes so small that any flow measurement will be inaccurate or even impossible.

Hence, the problem to be solved by the present invention is to provide a flow sensor that is especially suited for measuring the flow of liquids with a high heat capacity - density product cₚ·ρ.

This problem is solved by the flow sensor of claim 1. Accordingly, at least one metal layer is arranged over at least part of the insulating layer and extends at least between the heater and the temperature sensor(s). As will be discussed below, this arrangement increases the direct heat flow (i.e. the heat flow not through the fluid) between the heater and the temperature sensor(s). This measure shifts the second regime to higher velocities, thereby providing an increased measurement range for the flow sensor.

In operation, the flow sensor is located such in respect to the fluid to be measured that the metal layer or metal layers is/are located between the fluid on the one side and the heater and the at least one temperature sensor on the other side.

Other preferred embodiments of the invention are described in the dependent claims as well as the following description, which makes reference to the attached figures, wherein
Fig. 1 is a top view of a flow sensor,
Fig. 2 is a sectional view along line II-II of Fig. 1,
Fig. 3 is an enlarged part of Fig. 2 showing the design of the insulating layer and the metal layers,
Fig. 4 shows the dependency of ΔT on the flow velocity without metal layers and
Fig. 5 shows the dependency of ΔT on the flow velocity with metal layers.

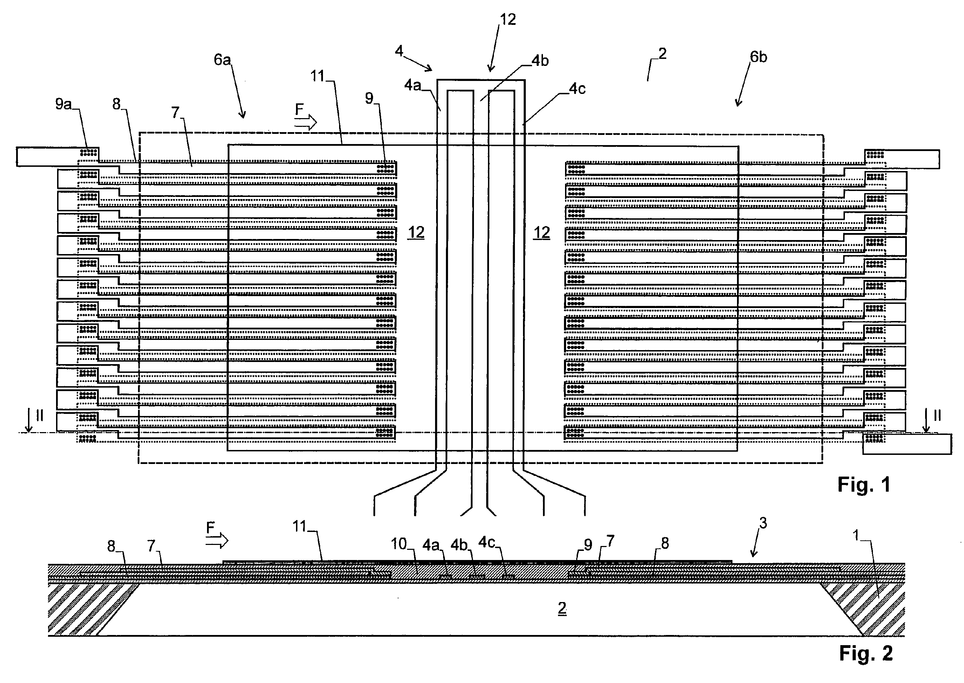

The flow sensor of Figs. 1 and 2 has a silicon substrate 1, even though another semiconductor or dielectric substrate could be used as well, such as a glass substrate. A recess or opening 2 has been formed in substrate 1 by etching techniques and is spanned or at least partially covered by a membrane 3. A heater 4 extends over membrane 3. In the embodiment of Figs. 1 and 2, heater 4 is formed by three parallel conductors 4a, 4b, 4c, the two outer conductors 4a, 4c being arranged, electrically, in parallel, while the center conductor 4b (having double cross section) is in series to the conductors 4a, 4c.

Two temperature sensors 6a and 6b, each consisting of a thermopile formed by plurality of thermocouples in series, are arranged upstream and downstream of heater 4 (the terms "upstream" and "downstream" being defined in respect to a flow direction F perpendicular to the longitudinal axis of the heater). Each sensing thermocouple consists of a metal bar 7 (shown in continuous lines in Fig. 1) formed in a metal layer of the integrated circuit, as well as a polysilicon bar 8 (shown in dotted liens in Fig. 1) formed in the polysilicon layer of the integrated circuit. The metal and polysilicon bars 7, 8 of each thermocouple are interconnected at a first junction 9 on membrane 3. The polysilicon and metal bars 8, 7 of two neighboring thermocouples are interconnected at a second junction 9a, which second junction 9a is not located on membrane 3, but over the bulk of substrate 1.

The basic principle of operation of such a device is e.g. described in US 2003/0115952. A flow along flow direction F causes the distribution of heat from heater 4 to become asymmetric, which creates a difference of temperature at the first junctions 9 of the two temperature sensors 6a, 6b. At the same time, the second junctions 9a remain at substantially constant temperatures due to the heat exchange through the thermally conducting substrate 1. Hence, the difference of the voltages from the thermopiles 6a, 6b (or any value proportional thereto) is substantially a measure of the temperature difference ΔT at the first junctions 9 upstream and downstream of heater 4. This temperature difference ΔT is a measure of the mass flow of the fluid.

As can be seen from Fig. 2, the metal and polysilicon layers of the heater 4 and the temperature sensors 6a, 6b are covered by an insulating layer 10, which is advantageously SiN. Insulating layer 10 is in its turn covered by several metal layers 11. The metal layers 11 cover at least part of the heater 4 and the temperature sensors 6a, 6b, as can be seen from Fig. 1 where the contour of the metal layers 11 is depicted by a solid line. Advantageously, the metal layers 11 extends over the pags 12 between heater 4 and the temperature sensors 6a, 6b for increasing the direct heat flow between these two components for reasons which will become apparent below.

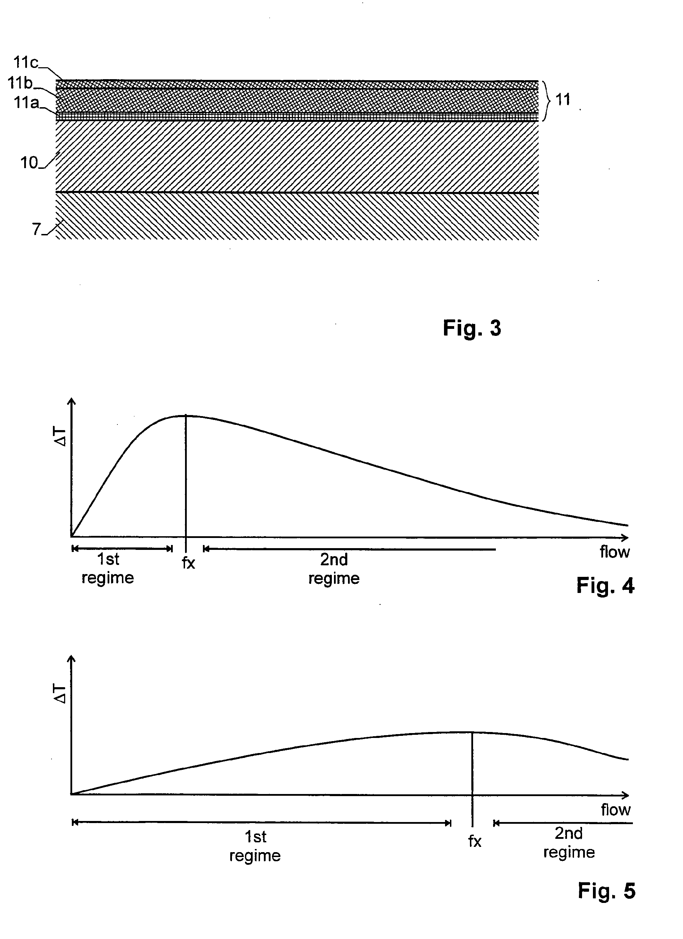

An advantageous design of the metal layers 11 is shown in Fig. 3. As can be seen, the metal layers 11 lie on top of insulating layer 10 (where "top" designates the direction that the surface of substrate 1 that carries the heater 4 and the temperature sensors 6a, 6b is facing).

A first metal layer is a titanium tungsten layer 11a, which provides adhesion between the insulating layer 10 and the subsequent metal layers. A typical thickness of titanium tungsten layer 11a may e.g. be 100 nm. On top of titanium tungsten layer 11a rests a copper layer 11b of a thickness of e.g. 400 nm. The primary purpose of copper layer 11b is to provide a heat conductor for increasing the heat flow within the metal layers. The topmost layer is a noble metal layer 11c, which provides passivation and has e.g. a thickness of 400 nm. Noble metal layer 11c may e.g. be of platinum or gold. It forms the top surface of the flow sensor. Instead of a noble metal layer, a titanium layer can be used as well, in particular in medical applications, because of the high biocompatibility of titanium.

Figs. 4 and 5 illustrate the role of the metal layers 11. Fig. 4 shows the dependence of the measured temperature difference ΔT on the fluid flow for a sensor without metal layers 11, while Fig. 5 shows the same dependence for a sensor with metal layers 11.

As can be seen and as has already been discussed above, in a first regime when the flow velocity is low, heat conductance effects are dominant and the temperature difference ΔT increases with increasing flow. In a second regime at high flow velocities, where heat transport due to flow effects is dominant, the temperature difference ΔT decreases with increasing flow and finally falls to such low values that measurements become inaccurate.

In order to have unambiguous results, the flow sensor should operate in only one regime over its whole measuring range. Advantageously, the first regime is used since it allows to measure flows near zero with high accuracy and near-linearity.

The position fx of the maximum signal, which forms the border between the first and second regime, depends on the heat capacity - density product cₚ·ρ of the fluid. If cₚ·ρ is high, such as for a liquid, fx is much closer to zero than for fluids where cₚ·ρ is low, such as for a gas. Hence, in a conventional device, the measurement range for liquids with high cₚ·ρ can be fairly limited.

This problem can be solved by applying the metal layers 11 on top of the temperature sensors 6a, 6b and the heater 4. This is illustrated in Fig. 5. As can be seen, the metal layers 11 have two effects: On the one hand, they lead to a decrease of the amplitude of the temperature difference ΔT, on the other hand they shift the position of fx to higher flows. Hence, by adding the metal layers 11, the first regime and therefore the measuring range of the device can be expanded to higher values.

The decrease of signal amplitude caused by the metal layers 11, on the other hand, is of minor importance because overall signal strength is generally still high when measuring the flow of a liquid with high cₚ·ρ.

One major advantage of the design of Figs. 1 - 3 is its compatibility with standard CMOS processes. It allows to manufacture the heater 4, the temperature sensors 6a, 6b as well as any other passive or active circuitry on substrate 1 by means of a standard CMOS chip manufacturing process. The metal layers 11 can then be applied in a post processing step, as well as recess 2. The metal layers 11 can e.g. be applied by sputtering.

The measuring range of the flow sensor can be tailored by adjusting the thickness of the metal layers 11, in particular of copper layer 11b.

It must be noted that the design shown in Figs. 1 - 3 is only one of a large number of designs that can take advantage of the present invention.

For example, the number of metal layers 11 can be larger than three, or it can be two or even one. If top metal layer 11c is e.g. made of gold or another metal with sufficiently high thermal conductivity, copper layer 11b may be dispensed with completely. ,

Similarly, depending on the composition of insulating layer 10, titanium tungsten layer 11a may have to be replaced by another suitable layer having the desired adhesion properties, or it may be omitted altogether.

The embodiments described above describe a design where the heater 4 and the temperature sensors 6a, 6b are located at least partially on a membrane 3. The advantage of this design is an increased sensitivity. Placing the metal layers 11 on top of the heater 4 and the temperature sensors 6a, 6b, i.e. between these components and the fluid to be measured, provides substantially better results than having a heat conducting structure below the heater 4 and the temperature sensors 6a, 6b.

Recess or opening 2 can also be replaced by any other structure having low heat conductance, such as a nanoporous structure of silicon oxide.

Figs. 1 - 3 show a symmetric design of heater 4 and the temperature sensors 6a, 6b. However, depending on the desired application of the flow sensor, this design can also be asymmetric. Even a design with only one temperature sensor adjacent to heater 4 may profit from the metal layers 11.

In the embodiment shown in Figs. 1 and 2, the metal layers 11 cover a part of each temperature sensor 6a, 6b only, in order to avoid a thermal shunt between the contact rows 9 and 9a. They may, however, also cover each temperature sensor 6a, 6b completely, in particular if temperature sensors other than thermopiles are used.

The total thickness of all the metal layers may vary. A typical thickness is between 100 and 1000 nm. A higher thickness may be used if the sensor is to measure liquid flows at very high flow velocities.

## Claims

1. A flow sensor for measuring the flow of a fluid, said flow sensor comprising
a substrate (1),
a heater (4) integrated on said substrate (1),
at least one temperature sensor (6a, 6b) integrated on said substrate (1) adjacent to said heater (4),
at least one electrically insulating layer covering at least part of said heater (4) and said temperature sensor (6a, 6b),
**characterized in that** said flow sensor further comprises at least one metal layer (11) arranged over at least part of said insulating layer and extending at least between said heater (4) and said temperature sensor (6a, 6b).

2. The flow sensor of claim 1 further comprising a recess or opening (2) arranged in said substrate (1) and a membrane (3) extending over at least part of said recess or opening (2), wherein said heater (4), said at least one temperature sensor (6a, 6b) and said at least one metal layer (11) are arranged at least partially on said membrane (3).

3. The flow sensor of any of the preceding claims comprising at least one titanium tungsten layer (11a) .

4. The flow sensor of any of the preceding claims comprising at least one copper layer (11b).

5. The flow sensor of any of the preceding claims comprising at least one noble metal or titanium layer (11c).

6. The flow sensor of claim 5 wherein said noble metal or titanium layer (11c) forms a top surface of said flow sensor.

7. The flow sensors of claims 3 and 4 and of any of the claims 5 or 6 wherein said noble metal or titanium layer (11c) is arranged over said copper layer (11b) and said copper layer (11b) is arranged over said titanium tungsten (11a) layer.

8. The flow sensor of any of the preceding claims comprising two temperature sensors (6a, 6b) integrated on said substrate (1) with said heater (4) arranged between said temperature sensors (6a, 6b), wherein said at least one metal layer (11) is extending at least between said heater (4) and both said temperature sensors (6a, 6b).

9. The flow sensor of any of the preceding claims wherein a total thickness of said metal layer(s) (11) is between 100 and 1000 nm.

10. Application of the flow sensor of any of the preceding claims wherein said flow sensor is located such in respect to the fluid to be measured that said at least one metal layer (11) is located between said fluid on one side and said heater (4) and said at least one temperature sensor (6a, 6b) on another side.
